(19) Europäisches Patentamt European Patent Office Office européen des brevets

(11) EP 3 876 242 A1

(12) **EUROPEAN PATENT APPLICATION**

(43) Date of publication:
08.09.2021 Bulletin 2021/36

(51) Int Cl.:
*G21B 3/00* (2006.01)

(21) Application number: 20075004.0

(22) Date of filing: 06.03.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Van Bemmelen, Robert
2587 SL Den Haag (NL)

(72) Inventor: Van Bemmelen, Robert
2587 SL Den Haag (NL)

Remarks:
•In accordance with Article 14(2), second sentence EPC the applicant has filed a text with which it is intended to bring the translation into conformity with the original text of the application.
•The references to the drawing(s) no. 1, 2, 3 and 4 are deemed to be deleted (Rule 56(4) EPC).
•Amended claims in accordance with Rule 137(2) EPC.

(54) **TANDEM FUSIONREACTOR**

(57) This modem reactor is an accelerator which accelerates ions from a magnetic-bottle to the inner side of a metallic sphere, balloon or cylinder with a high voltage pulse. The magnetic-bottle must have the same configuration as the reactor for instance a metallic sphere or cylinder configuration.

bad timing

Magn. bottle on          Diracpulse without          Magn. bottle    fig.2
                         pre-ignition                on again

EP 3 876 242 A1

**Description**

This modem reactor is an accelerator which from the magnetic-bottle to the inner side of the metallic sfere lets the ions accelerate to the inner side of the sfere/balloon or cylinder with a high voltage-pulse. The magnetic-bottle must have the same configuration as the reactor for instance a metallic sfere or cylinder configuration. The distance to the target is then always the same.

While every cyclus has only one chance for acceleration, is the cyclus to be repeated for another power-strike. The energy of the accelerated ions is showed by:

$1/2mv^2$.

The ion-speed of all the ions is the same. The Bolzmann equation in Kelvin degrees is according to the law of gass with the entropy :

$3/2kT$ k=constance of Bolzmann, and T in degrees Kelvin.

Hereby is there a connection between the fusion temperature and speed of the ions. Of course many D-ions have to make a fusion with the Deuteriumatoms in the lithiumdeuteride on the targetplace.Not all the iones will make a fusion, but with the right timing of the diracpulse, many D-ions will make a fusion. Suppose we take the easy reaction: $T+LiD = {}^4He +n+17,5MeV$, the fusiontemp. is: $E=3/2kT$ with a temp. of $54X10^6$ degrees Kelvin. $1eV =1.6x10^{-19}$ fusion voltage.

$$qxV_{AB}=1,6x10^{-19}x\ V_{AB}=11,2\ x10^{-16}\ joule.$$

$$E=3/2x1,4x10^{-23}\ x\ 54x10^6\ =\ 11,2x10^{-16}\ joule$$

$$VAb=7000eV=7KeV$$

7KeV is necessary to realise a fusion but in practice is this a minimum

The difference with Bolzmann entropy is the fact that the ions in acceleration have the same speed and there is no mediate speed anymore. The fusion reaction D + T is easier to realise then with elements further on in the mendelejefftable till Iron.

According to the T-D statistics is 7KeV x 14 = 98KeV energy for all T-ions who are getting accelerated while the 7KeV is an average energy. The T-ions are all accelerated with the dirac-voltage-pulse, but the litiumdeuteride is standing in rest on the target. That means that the pulse-voltage with $root^2$ must rise till 139000 Volt accelerated Voltage. The control of the accelerationvoltage is necessary for a maximum of fusion-energy.

Variation between 139000Volt and 300000Volt

$$v^2=44800X10^7$$

$v^2=4480X10^8$ fusionspeed of the ion $=v=66,9X10^4$ meter/sec

While the solid-part is standing on the target and only the ions from the magnetic bottle are accelerated, must the fusion speed highered with $root^2$ :

Fusionspeed Tritium ion $v=94,6 X10^4$ meter/sec 946 km./sec

Special attention on the voltage-shortcut in times of ionisation and the voltage on the diracpulse must close on time for a perfect working in the reactor (look to the timing-diagram).While The ions in the first place have a heating up in the magnetic-bottle by entropy, the ions gets after that an acceleration with a diracpulse in the direction of the target, we call that a tendem.

Elements

Tritium is an expensive and difficult element (two years halfvaluetime). With an accelerator it is possible to take a cheap element deuterium.

solid LithiumDeuteride + Deuterium

$$^6LiD + D = {}^4He + {}^4He + 22,2MeV$$

much energy

If we want to use Tritium,solid LiD+T and (T in the magneticbottle)

$$T + D = {}^4He + n + 17,5MeV$$

With neutron we get also Tritium.

These reactions we get on the target (inner side of the metalic balloon) Whereby Lithium also is an cheap element. The target of the reactor is made of steel and has been able to use nucleair energy to heat the water till a high temperature. We get light problems in the surface of the iron inner side of the balloon after a long time. With the possibility of acceleration we get also a universel reactor: several elements can be used now.

UNIVERSAL REACTOR

STIKSTOF KOOLSTOF CYCLUS

The N-C cycles is also possible in our reactor. These cycles begins with H + C : $^1H + {}^{12}C = {}^{13}N$ + gammaradiation $^{13}N = {}^{13}C + e^+$ + neutrino enz.

TIMING

The timing report shows how important the timing of the diracpulse is in the reactor. During the fusion is there ionisation in the reactor and the fusion stops. There is no vacuum anymore. A shortcut disturbs the reactor and may damage the reactor.With an early activation of the diracpulse we have fusion on the target and then the pulse has to stop immediately. Therefore we use a short diracpulse.

There was always a thought that the ionisation makes a fusion Impossible but now there is a way out. They told me that a pulse system not enougf energy gives, but an Otto-explosivmoter gives an smooth ride and much power. After all it goes fine and smoosly in cars.

In our reactor we have an insulator as a console in which the ions arrive in the magnetic bottle. Also all the connections and the pipeline for the ions to the bottle goes with the console made of glass or porcelain. In the ionisation time we may use this time to take the energy to the cooling. The fusion can not appear in the magnetic bottle but on the target (inner side of the Iron balloon).

KOOLSTOF

C+N is possible but C C reaction is difficult with a high fusion temp. of 600 x$10^6$ Kelvin. Carbon in the form of Diamond has a special feature to heat the energy quickly and it goes 5 times quicker then copper.

The reactions C-C :

|  | fusie energy in Mev |
|---|---|
| C12 + C12 Mg24+GAMMA | + 13,93 MeV |
| C12 + C12 = Mg23 + neutron | + 2,6 ,, |
| C12 + C12 = Ne23 + proton | + 2,24 ,, |
| C12 + C12=Ne20+He4 | + 4,62 ,, |
| C12 + C12 = O16+2xHe+neutrino+ | 0.11 ,, |

Other isotopes
C12 + C13     + 16,32, MeV
C13 + C13     +22,47 ,,
C12 + 016     + 16,77 ,,

**Claims**

1. The Diracpulse must have pre-ignition and has to be short to let the ions free to go to the. target (the inner side of the balloon or cylinder) according the timer layout picture .

2. The magneticbottle has low-energetic-ions inside (like Deuterium or Tritium or elements in the beginning of the Mendelejefftable.

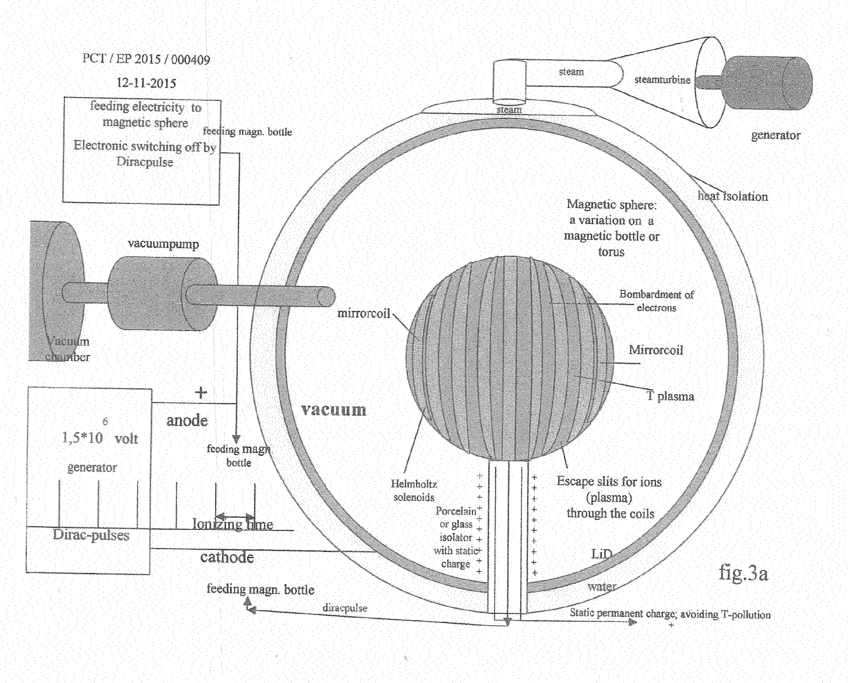

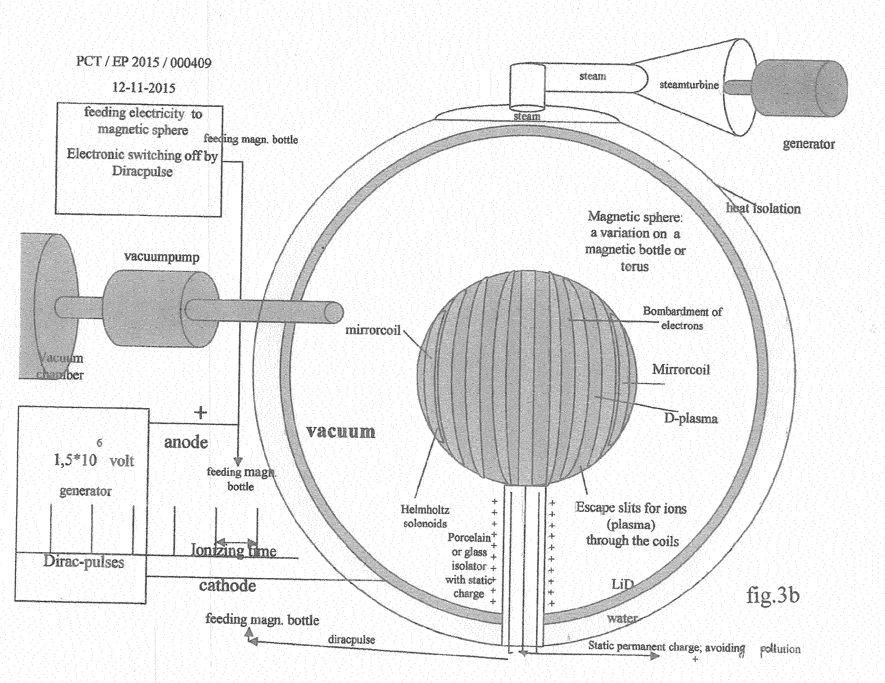

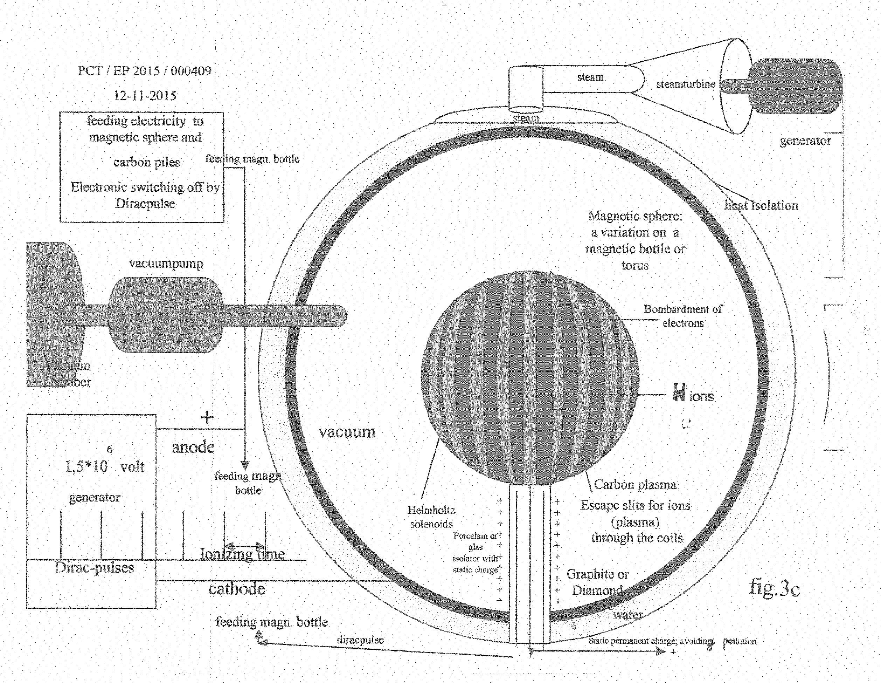

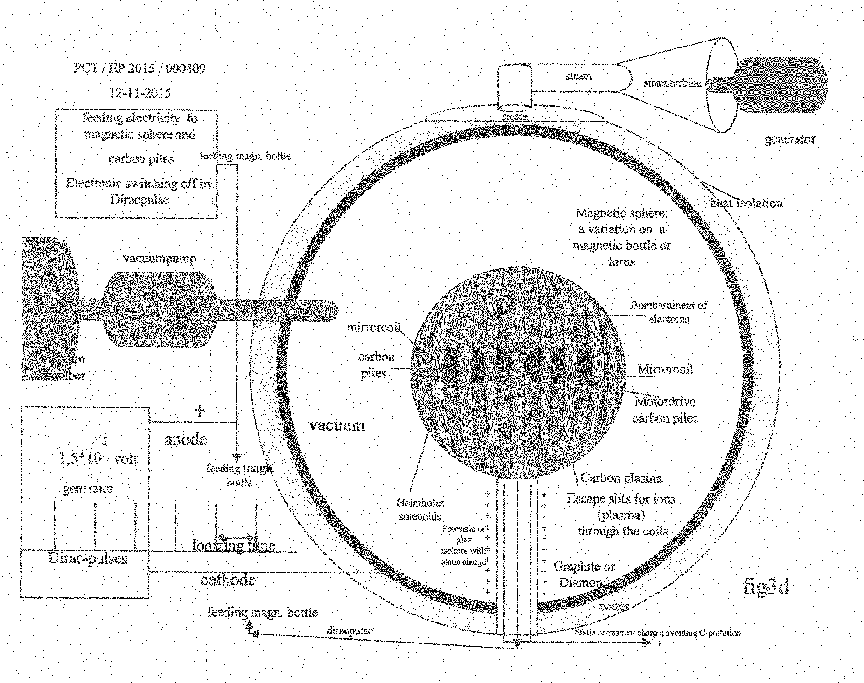

3. With a magnetic pipeline and ionchamber fig.3, it is possible to put(6x10exp.23)ions or more through a glass or porcelain console to bring the all ions into the magn.bottle, also the electric connections of the magn.bottle go through the console.

4. The Deuterium ions from the magneticbottle have collide on lithium deuteride in a vacuum with the Diracpulsvoltage. The inside of the balloon kettel is full of solid LiD. More other elements can be used in the reactor.

5. The second wall on the outside of the metallic balloon fig.3 has a place for coolwater. The kettel gives heat-energy and with turbines & dynamo we are getting electrical-energy.

Amended claims in accordance with Rule 137(2) EPC.

1. It is possible to construct an electrostatic fusion reactor with the distinguishing mark that a very short Diracpulse can accelerate deuteriumions to a goal of lithiumdeuteride to make fusion-energy.

2. According to Claim 1 with the mark that the reactor can merge fusion by a uniformly acceleration of Deuterium-ions only one short stroke in only one cyclus and then as many cycluses as possible.

3. According to Claim 1 and 2 with the mark that deuterium will collide with Lithiumdeuteride with very high speed,so the reactor must be in a pulsetion way.

4. According to claim 1,2 and 3 that the Diracpulse a pri-ignition in the reactor gives for a perfect timing, and this is most important.

5. According to claim 1,2,3 and 4 that the ionisation takes place in the console and pipeline and magnetic bottle from a chamber-stock with Deuterium atoms.

6. According to claim 1,2,3,4 and 5 that the water in the boiler is heated for the steam turbine and dynamo to have electrocal energy,

7. According to claim 1,2,3,4,5 and 6 that the waterboiler is iron made

8. According to claim 1,2,3,4,5,6 and 7 that the magnetic bottle has escape slits to let the ions flow through the coils when the magnetic bottle is out and the highvoltage Diracpuls takes the Deuterium to the goal, the innerside of the reactor with the solid Lithiumdeuteride.

9. According to claim 1,2,3,4,5,6,7 and 8 that a pump turbine a vacuum makes in the reactor space and in every cycle.

10. According to claim 1,2,3,4,5,6,7,8 and 9 that for a better working order an empty sfere of glass (little bit smaller then the Magn.bottle as a sfere form .then there is no loss of Deuteriumions. I call that a toroide.

11. According to claim 1,2,3,4,5,6,7,8,9 and 10 that the console fig3d a static charge has to avoid a Deuterium pollution in the console. The console, the pipeline and de magnetic bottle becomes a TUBE LUMINISANCI (TL) with 2poles and an ignition pole. Only the magneticbottle is not a closed tube but a magnetic tube.

12. According to claim 1,2,3,4,5,6,7,8,9,10 and 11 is a vacuum chamber and is connectid on the turbine pump for a quick vacuum.

13. According to claim 1,2,3,4,5,6,7,8,9,10,11 and 12 It is possible that the boiler(kettle) of an old cole or gass electricalplant can be replaced for our fusion reactor-boiler.

14. According to claim 1,2,3,4,5,6,7,8,9,10,11,12 and 13 A whole old electrical plant can simply change in to a modern nucleair plant with possibillitis to work with many of the light atoms till iron. The reactor is save and only gammaradiation must stop with concrete and iron.

bad timing

EP 3 876 242 A1

Magn.bottle on

Diracpulse without
pre-ignition

Magn. bottle
on again

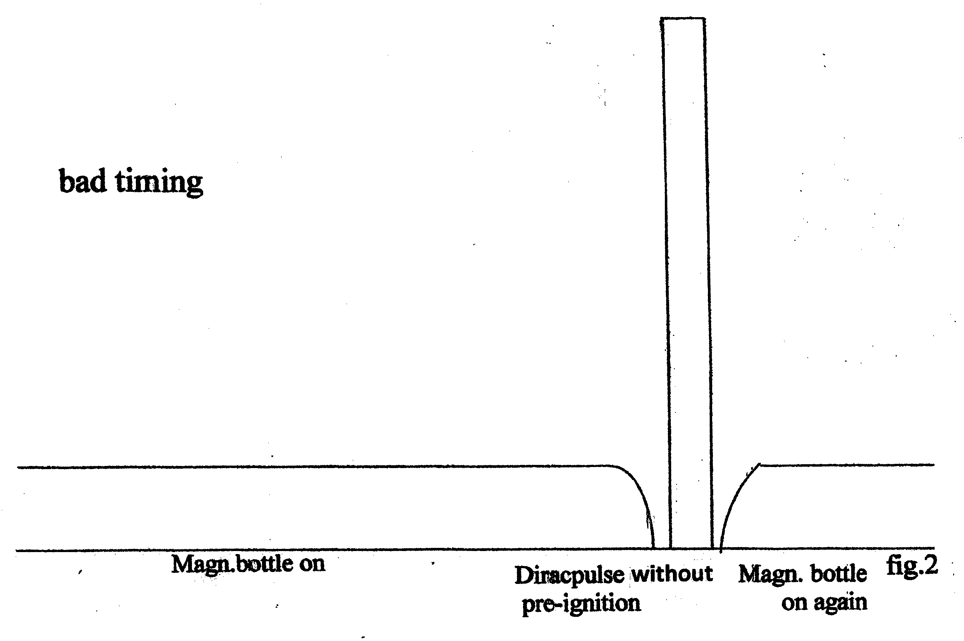

fig.2

fig.3a

generator

steamturbine

steam

steam

heat isolation

Magnetic sphere:
a variation on a
magnetic bottle or
torus

Bombardment of
electrons

Mirrorcoil

T plasma

Escape slits for ions
(plasma)
through the coils

LiD

water

Static permanent charge; avoiding T-pollution

+ + + + + + + + +

+ + + + + + +

Porcelain
or glass
isolator
with static
charge

Helmholtz
solenoids

mirrorcoil

vacuum

diracpulse

feeding magn. bottle

PCT / EP 2015 / 000409

12-11-2015

feeding magn. bottle

feeding electricity to
magnetic sphere

Electronic switching off by
Diracpulse

vacuumpump

vacuum
chamber

feeding magn.
bottle

anode

+

Ionizing time

cathode

$1,5*10^{6}$ volt
generator

Dirac-pulses

EP 3 876 242 A1

feeding electricity to magnetic sphere

feeding magn. bottle

Electronic switching off by Diracpulse

vacuumpump

Vacuum chamber

+

anode

$1,5*10^6$ volt

generator

Dirac-pulses

Ionizing time

cathode

feeding magn. bottle

feeding magn. bottle

diracpulse

steam

steam

steamturbine

generator

heat isolation

Magnetic sphere: a variation on a magnetic bottle or torus

Bombardment of electrons

mirrorcoil

Mirrorcoil

D-plasma

vacuum

Helmholtz solenoids

Porcelain or glass isolator with static charge

Escape slits for ions (plasma) through the coils

LiD

water

Static permanent charge; avoiding pollution

fig.3b

PCT / EP 2015 / 000409

12-11-2015

feeding electricity to magnetic sphere and carbon piles

Electronic switching off by Diracpulse

feeding magn. bottle

steam

steamturbine

steam

generator

heat isolation

Magnetic sphere: a variation on a magnetic bottle or torus

vacuumpump

Bombardment of electrons

Vacuum chamber

$\mathbf{H}$ ions

vacuum

+

anode

6

$1,5 \cdot 10$ volt

generator

feeding magn. bottle

Carbon plasma

Escape slits for ions (plasma) through the coils

Helmholtz solenoids

Dirac-pulses

Ionizing time

cathode

Porcelain or glas isolator with static charge

Graphite or Diamond

fig.3c

water

feeding magn. bottle

diracpulse

Static permanent charge; avoiding pollution

PCT / EP 2015 / 000409

12-11-2015

feeding electricity to
magnetic sphere and

carbon piles          feeding magn. bottle

Electronic switching off by
Diracpulse

vacuumpump

Vacuum
chamber

+

6
1,5*10  volt

generator

Dirac-pulses

anode

feeding magn.
bottle

Ionizing time

cathode

feeding magn. bottle

diracpulse

steam                steamturbine

steam

generator

heat isolation

Magnetic sphere:
a variation on a
magnetic bottle or
torus

Bombardment of
electrons

mirrorcoil

carbon
piles

Mirrorcoil

Motordrive
carbon piles

vacuum

Carbon plasma

Escape slits for ions
(plasma)
through the coils

Helmholtz
solenoids

Porcelain or
glas
isolator with
static charge

Graphite or
Diamond

water

Static permanent charge; avoiding C-pollution

fig3d

Europäisches
Patentamt

European
Patent Office

Office européen
des brevets

# DECLARATION

**Application Number**

which under Rule 63 of the European Patent Convention EP 20 07 5004
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G21B3/00 |

In reply to the invitation to file a
statement indicating the subject-matter to
be searched, the Applicant failed to
provide the requested information in due
time. In his letter of 01-02-2021 the
Applicant did not address the questions
raised in our request for clarification
according to rule 63(1) EPC of 27-11-2020.
It is re-iterated that non-compliance of
the present application with the
substantive provisions of the EPC is such
that a meaningful search of the whole
claimed subject-matter can not be carried
out (Rule 63 EPC and Guidelines B-VIII,
3), the reasons being the following:
Even though the categories of claims 1-5
can not unambiguously be determined, it
appears, that independent claims 1 and 4
relate to methods and that independent
claims 2, 3, and 5 relate to apparatuses.
It is noted that, even though some of the
terms employed in claims 1-5 have some
well-defined technical meaning, no sense
could be attributed to any of the word
compositions of claims 1-5.
With respect to the application as a whole
it appears, that the generation of energy
from nuclear fusion is addressed. However,
the description does not provide support
and disclosure within the meaning of
Articles 84 and 83 EPC for any such method
and apparatus having the said property or
effect, and there is no common general
knowledge of this kind available to the
person skilled in the art.
As there is no clear indication of the
subject-matter which might be expected to
form the basis of the claims to be filed
later in the procedure, no meaningful
                                    -/--

| Place of search | Date | Examiner |
|---|---|---|
| Munich | 24 February 2021 | Sewtz, Michael |

EPO FORM 1504 (P04F37)

**Europäisches Patentamt**
**European Patent Office**
**Office européen des brevets**

# DECLARATION

Application Number

which under Rule 63 of the European Patent Convention EP 20 07 5004
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>search is deemed possible (Rule 63(2) EPC).<br><br>The applicant's attention is drawn to the fact that a search may be carried out during examination following a declaration of no search under Rule 63 EPC, should the problems which led to the declaration being issued be overcome (see EPC Guideline C-IV, 7.2). | |

| Place of search | Date | Examiner |
|---|---|---|
| Munich | 24 February 2021 | Sewtz, Michael |

EPO FORM 1504 (P04F37)